# EUROPEAN PATENT APPLICATION

(11) **EP 4 407 769 A1**
(43) Date of publication of application: **31.07.2024**
(21) Application number: 23216821.1
(22) Date of filing: 14.12.2023
(51) Int. Cl.: H01M 50/211, H01M 50/209, H01M 10/613, H01M 10/647, H01M 10/6551, H01M 10/6554, H01M 50/503

(54) **BATTERY CELL ASSEMBLY AND BATTERY PACK INCLUDING THE SAME**

(30) Priority: 17.01.2023 KR 20230006653
(71) Applicant: SK On Co., Ltd., Seoul 03161 (KR)
(72) Inventor: PARK, Sin Ho, 34124 Daejeon (KR); LEE, Yun Nyoung, 34124 Daejeon (KR); CHOI, So Yeon, 34124 Daejeon (KR); HAN, Dong Hwa, 34124 Daejeon (KR)
(74) Representative: Bird & Bird LLP

(57) **Abstract**

The disclosed technology relates to a battery cell assembly (200) and a battery pack (10) including the same. More particularly, the disclosed technology relates to a battery cell assembly (200) with improved cooling efficiency and a battery pack (10) that can control the number of battery cell assemblies installed in the battery pack (10) and increase cooling effect of the battery cell assembly (200).

## Description

### TECHNICAL FIELD

The disclosed technology relates to a battery cell assembly and a battery pack including the same. More particularly, the disclosed technology relates to a battery cell assembly with improved cooling efficiency and a battery pack that can control the number of battery cell assemblies installed in the battery pack and increase cooling effect of the battery cell assembly.

### BACKGROUND

Existing battery packs matched the required amount of voltage and current of the battery pack by configuring a battery module based on requirements. In case of the battery module, a plurality of battery cells of the battery module is connected to each other and formed as a unibody. Hence, when the requirements of the battery pack are changed, there is a problem that it is difficult to reconfigure the overall capacity of the battery pack in response to the changed requirements.

### [Prior Art Document]

[Patent Document] Korean Patent Application Publication No. 10-2022-0099369

### SUMMARY

The disclosed technology can be implemented in some embodiments to provide a battery pack changing the overall capacity by controlling the number of battery cell assemblies based on requirements.

The disclosed technology can be implemented in some embodiments to improve cooling efficiency of a battery cell assembly including a plurality of battery cells connected in series.

In one aspect of the disclosed technology, a battery cell assembly may comprise a battery cell of a shape extending in a front-rear direction, a pad of a shape extending in the front-rear direction, the pad being in contact with one surface of the battery cell, and a cover part forming a cover inner space configured to accommodate the battery cell and the pad, wherein the cover part may include a first cover in contact with one surface of the pad, and a second cover coupled to the first cover, wherein the second cover being in contact with other surface of the battery cell, and the second cover may include a cooling member forming at least a portion of an outer surface of the second cover.

In another aspect of the disclosed technology, a battery pack may comprise a frame, a plurality of battery cell assemblies accommodated in the frame, and a connector configured to connect the plurality of battery cell assemblies to each other, wherein the frame may include a channel part configured to extend in a front-rear direction and form an inner space, and a front plate and a rear plate respectively coupled to a front and a rear of the channel part, the front plate and the rear plate each including a plurality of insertion holes configured to communicate with the inner space, wherein each of the plurality of battery cell assemblies may be accommodated in the inner space through each of the plurality of insertion holes.

In an embodiment of the disclosed technology, there can be provided a battery pack changing the overall capacity by controlling the number of battery cell assemblies based on requirements.

An embodiment of the disclosed technology can improve cooling efficiency of a battery cell assembly including a plurality of battery cells connected in series.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a battery pack 10 based on an embodiment of the disclosed technology.
FIG. 2 illustrates a battery cell assembly 200 of the battery pack 10 of FIG. 1.
FIG. 3 is an explode view of the battery cell assembly 200 of FIG. 2.
FIG. 4 illustrates a first insulating part 241 and a second insulating part 242 of the battery cell assembly 200 of FIG. 3.
FIG. 5 illustrates that the first insulating part 241 and the second insulating part 242 of FIG. 4 are coupled to a battery cell 230.
FIG. 6 illustrates a portion of the battery cell assembly 200 of FIG. 2 in which a bus bar assembly 220 and a battery cell 230 are connected in a state in which a second cover 212 is removed.
FIG. 7 illustrates a portion of the battery cell assembly 200 of FIG. 2 in which one battery cell 1230 and other battery cell 2230 adjacent to each other are connected in a state in which a second cover 212 is removed.
FIG. 8 is a cross-sectional view of the battery cell assembly 200 taken along B1-B2 of FIG. 2.
FIG. 9 is an exploded view of the battery cell assembly 200 based on an embodiment of the disclosed technology and is a cross-sectional view of the battery cell assembly 200 taken along B1-B2 of FIG. 2.
FIG. 10 illustrates the battery pack 10 of FIG. 1 when viewed from the front.
FIG. 11 illustrates a cross section of the battery pack 10 taken along A1-A2 of FIG. 1 when viewed from the front.

### DETAILED DESCRIPTION

Reference will now be made in detail to embodiments of the disclosed technology, examples of which are illustrated in the accompanying drawings. However, the following description is merely an example and does not limit the disclosed technology to a specific implementation.

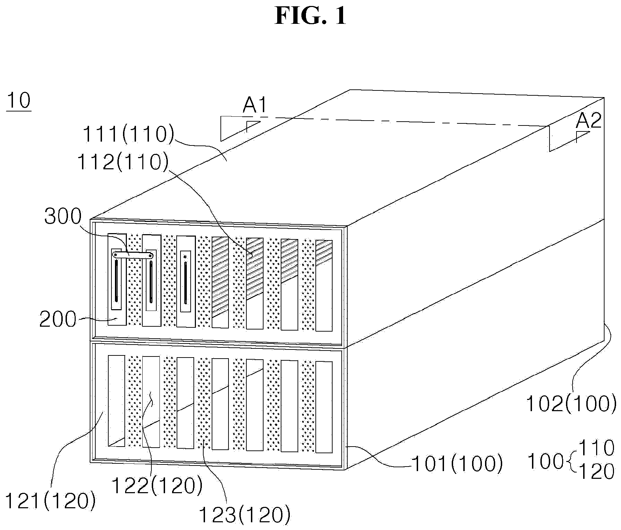

FIG. 1 illustrates a battery pack 10 based on an embodiment of the disclosed technology. A plurality of battery packs 10 may be provided. As illustrated in FIG. 1, the plurality of battery packs 10 may be stacked and arranged.

The battery pack 10 may include a frame 100. The frame 100 may extend from one end 101 to other end 102. For example, the one end 101 of the frame 100 may be a front end of the frame 100. The other end 102 of the frame 100 may be a rear end of the frame 100.

A longitudinal direction of the frame 100 may be parallel to a front-rear direction. For example, the longitudinal direction of the frame 100 may be parallel to a direction from the one end 101 to the other end 102 of the frame 100. A width direction of the frame 100 may be parallel to a left-right direction. A height direction of the frame 100 may be parallel to an up-down direction.

The frame 100 may include a channel part 110. The channel part 110 may include a perimeter portion 111. The perimeter portion 111 may extend in the front-rear direction. For example, the perimeter portion 111 may form an elongated shape in the longitudinal direction.

The perimeter portion 111 may form an inner space 112 formed by penetrating in the front-rear direction. For example, the perimeter portion 111 may have a rectangular pipe shape. For example, the inner space 112 of the perimeter portion 111 may be connected to the one end 101 of the frame 100 and may be open at the one end 101. For example, the inner space 112 of the perimeter portion 111 may be connected to the other end 102 of the frame 100 and may be open at the other end 102.

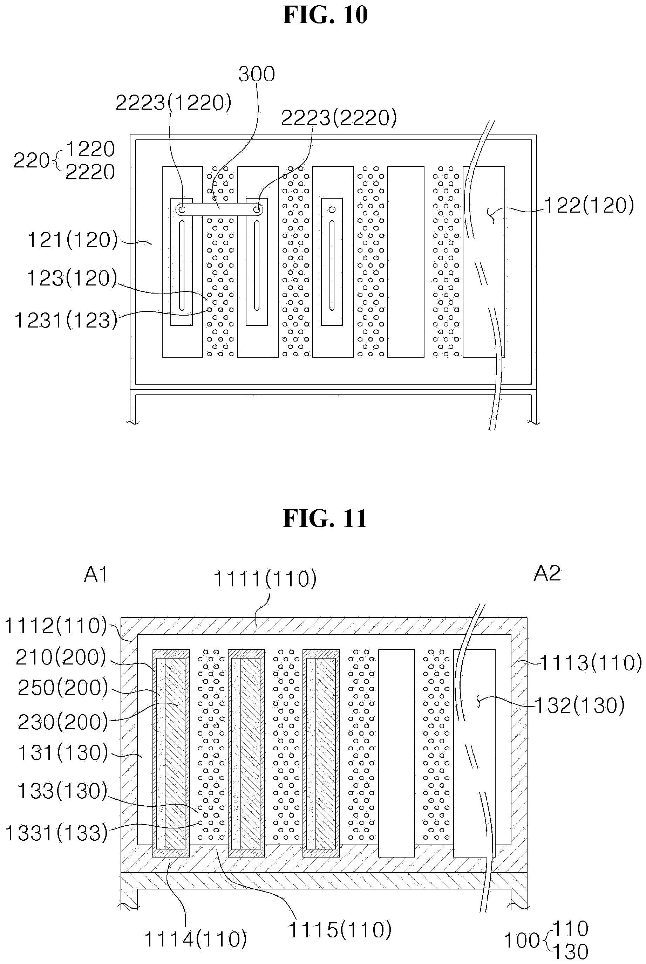

The frame 100 may include a front plate 120 and a rear plate 130 (see FIG. 11). The front plate 120 may be coupled to a front of the channel part 110. The rear plate 130 may be coupled to a rear of the channel part 110.

The front plate 120 may include a front plate body 121. The front plate body 121 may have a plate shape. The front plate body 121 may extend in the left-right direction and the up-down direction. A thickness direction of the front plate body 121 may be the front-rear direction.

The front plate 120 may include a front insertion hole 122. The front insertion hole 122 may be an opening or a hole formed in the front plate body 121. The front insertion hole 122 may be shaped to penetrate the front plate body 121 in the front-rear direction. The front insertion hole 122 may extend in the up-down direction. The front insertion hole 122 may communicate with the inner space 112 of the channel part 110.

The front plate 120 may include a plurality of front insertion holes 122. The plurality of front insertion holes 122 may be openings or holes formed in the front plate body 121. For example, the plurality of front insertion holes 122 may be arranged to be spaced apart from each other along the left-right direction.

The front plate 120 may include a front support part 123. The front support part 123 may be a portion of the front plate body 121 adjacent to the front insertion hole 122. For example, the front support part 123 may be positioned between two adjacent front insertion holes 122 of the plurality of front insertion holes 122. The front insertion holes 122 and the front support parts 123 may be alternately arranged.

The front plate 120 may include a front through hole 1231 (see FIG. 10). The front through hole 1231 (see FIG. 10) may be an opening or a hole formed in the front support part 123. The front through hole 1231 may be shaped to penetrate the front support part 123 in the front-rear direction. The front through hole 1231 may communicate with the inner space 112 of the channel part 110.

The front support part 123 may include a plurality of front through holes 1231. The plurality of front through holes 1231 may be arranged to be spaced apart from each other.

Referring to FIG. 11, the rear plate 130 and the front plate 120 may be symmetrical in the front-rear direction. For example, each component of the rear plate 130 and each corresponding component of the front plate 120 may be symmetrical in the front-rear direction.

For example, the rear plate 130 may include a rear plate body 131, a rear insertion hole 132, and a rear support part 133 respectively corresponding to the front plate body 121, the front insertion hole 122, and the front support part 123 of the front plate 120. The rear support part 133 may include a rear through hole 1331 corresponding to the front through hole 1231.

The insertion holes 122 and 132 may indicate at least one of the front insertion hole 122 and the rear insertion hole 132. The support parts 123 and 133 may indicate at least one of the front support part 123 and the rear support part 133. The through holes 1231 and 1331 may indicate at least one of the front through hole 1231 and the rear through hole 1331.

The battery pack 10 may include a battery cell assembly 200. The battery cell assembly 200 may be accommodated in the frame 100. The battery cell assembly 200 may be accommodated in the inner space 112 of the channel part 110 through the front insertion hole 122 of the front plate 120 or the rear insertion hole 132 of the rear plate 130.

The battery pack 10 may include a plurality of battery cell assemblies 200. The battery cell assembly 200 may be inserted into the front insertion hole 122 or the rear insertion hole 132. The front insertion hole 122 and the rear insertion hole 132, which are arranged on the same line in the front-rear direction, may be coupled to one battery cell assembly 200.

The number of battery cell assemblies 200 installed on the frame 100 may be adjusted based on the requirements of the battery pack 10. The battery cell assembly 200 may be installed in all the plurality of insertion holes 122 and 132 formed in the frame 100. Alternatively, the battery cell assembly 200 may be installed in some of the plurality of insertion holes 122 and 132 formed in the frame 100.

The battery pack 10 may include a connector 300. The connector 300 may be coupled to at least one of a front end or a rear end of the battery cell assembly 200. For example, the connector 300 may be disposed on at least one of an outer surface of the front plate 120 and an outer surface of the rear plate 130.

The connector 300 may electrically connect two adjacent battery cell assemblies 200 of the plurality of battery cell assemblies 200. For example, the two adjacent battery cell assemblies 200 may be connected in series or in parallel to each other by the connector 300.

The front support part 123 and the rear support part 133 disposed on the same line in the front-rear direction may form a flow path. The flow path may be formed by extending from the front through hole 1231 to the rear through hole 1331. The flow path may be formed between two battery cell assemblies 200 that are adjacent to each other in the left-right direction among the plurality of battery cell assemblies 200.

The battery cell assembly 200 adjacent to the flow path may be cooled by the flow path. For example, a coolant may be introduced into the flow path. The coolant may be a fluid. For example, the coolant may include at least one of air and cooling water.

For example, the coolant may be introduced into the flow path through the front through hole 1231. The coolant introduced into the flow path through the front through hole 1231 may flow toward the rear through hole 1331. The coolant may exchange heat with the battery cell assembly 200 while flowing in the flow path. The coolant reaching the rear through hole 1331 may be discharged to the outside through the rear through hole 1331.

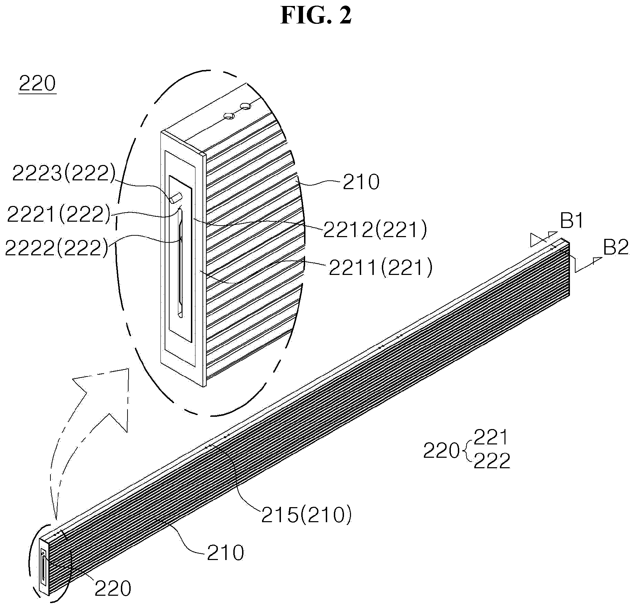

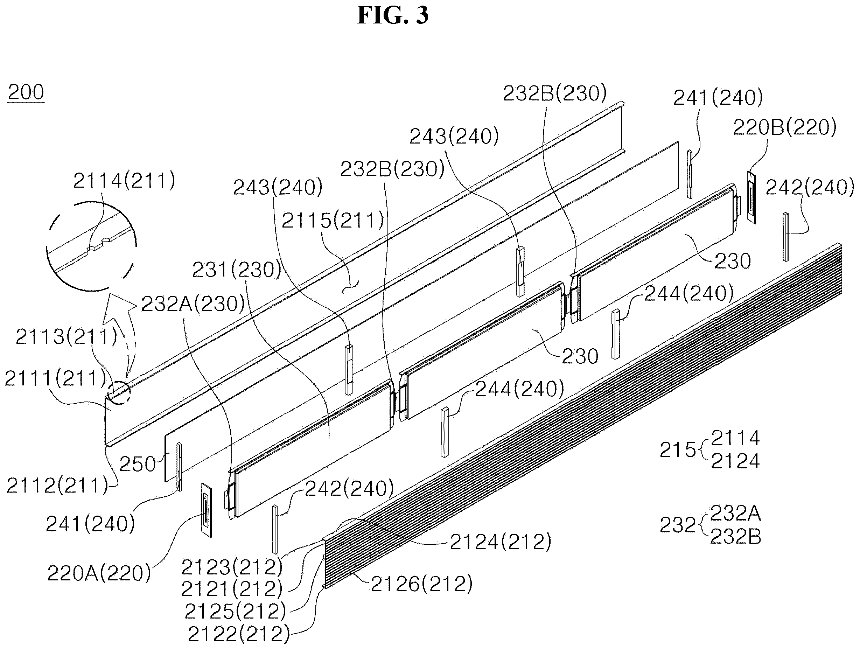

FIG. 2 illustrates the battery cell assembly 200 of the battery pack 10 of FIG. 1. FIG. 3 is an explode view of the battery cell assembly 200 of FIG. 2.

The battery cell assembly 200 may include a cover part 210. The cover part 210 may extend in the front-rear direction. The cover part 210 may form cover inner spaces 2115 and 2125 formed by penetrating in the front-rear direction. For example, the cover part 210 may have the shape of a rectangular pipe.

A vent hole 215 may be formed in an upper portion of the cover part 210. The vent hole 215 may allow the cover inner spaces 2115 and 2125 to communicate with the outside of the cover part 210.

The battery cell assembly 200 may include a bus bar assembly 220. A plurality of bus bar assemblies 220 may be provided. The bus bar assemblies 220 may be coupled to a front and a rear of the cover part 210, respectively.

Configuration of the bus bar assembly 220 is described below with reference to FIG. 2 by taking the bus bar assembly 220 coupled to the front of the cover part 210 as an example.

The bus bar assembly 220 may include a bus bar support part 221. The bus bar support part 221 may be coupled to the cover part 210.

The bus bar support part 221 may include a bus bar support body 2211. The bus bar support body 2211 may have a plate shape. The bus bar support body 2211 may extend in the left-right direction and the up-down direction. A thickness direction of the bus bar support body 2211 may be the front-rear direction. An inner surface (rear surface) of the bus bar support body 2211 may face the cover inner spaces 2115 and 2125. An outer surface (front surface) of the bus bar support body 2211 may form an outer surface of the battery cell assembly 200.

The bus bar support body 2211 may protrude outward from the perimeter portion 111 of the cover part 210. For example, the bus bar support body 2211 may protrude to the right more than a right surface of the cover part 210. When the cover part 210 is inserted into the front insertion hole 122 (see FIG. 1) of the front plate 120 (see FIG. 1), the inner surface (rear surface) of the bus bar support body 2211 may be in contact with an outer surface (front surface) of the front plate body 121 (see FIG. 1). When the inner surface of the bus bar support body 2211 is in contact with the outer surface of the front plate body 121, the insertion of the battery cell assembly 200 may be completed.

For example, the bus bar support body 2211 of the bus bar assembly 220 coupled to the front of the cover part 210 may protrude to the right more than the right surface of the cover part 210, and the bus bar support body 2211 of the bus bar assembly 220 coupled to the rear of the cover part 210 may extend from a left surface to the right surface of the cover part 210. The bus bar assembly 220 may be inserted into the front insertion hole 122 (see FIG. 1) from front to rear.

For example, the bus bar support body 2211 of the bus bar assembly 220 coupled to the front of the cover part 210 may protrude to the right more than the right surface of the cover part 210, and the bus bar support body 2211 of the bus bar assembly 220 coupled to the rear of the cover part 210 may protrude to the left more than the left surface of the cover part 210. In a state in which the bus bar assembly 220 is coupled to the front of the cover part 210, after the battery cell assembly 200 is inserted into the front insertion hole 122 from front to rear, the bus bar assembly 220 may be coupled to the rear of the cover part 210. An inner surface (rear surface) of the bus bar support body 2211 coupled to the front of the cover part 210 may be in contact with the outer surface (front surface) of the front plate body 121, and an inner surface (front surface) of the bus bar support body 2211 coupled to the rear of the cover part 210 may be in contact with an outer surface (rear surface) of the rear plate body 131. Hence, the bus bar assembly 220 may be fixed to the frame 100.

The bus bar support part 221 may include a bus bar insertion part 2212. The bus bar insertion part 2212 may protrude to a rear side (inside) of the bus bar support body 2211. An outer surface (front surface) of the bus bar insertion part 2212 may form an outer surface of the bus bar support part 221.

The bus bar assembly 220 may include a bus bar 222. The bus bar 222 may be coupled to the bus bar support part 221.

The bus bar 222 may include a bus bar body 2221. The bus bar body 2221 may have a plate shape. The bus bar body 2221 may be coupled to the outer surface (front surface) of the bus bar insertion part 2212.

The bus bar 222 may include a slot 2222. The slot 2222 may be formed by penetrating the bus bar body 2221 in the front-rear direction. The slot 2222 may extend in the up-down direction.

The bus bar 222 may include a bus bar protrusion 2223. The bus bar protrusion 2223 may protrude outward (forward) from the bus bar body 2221. The bus bar protrusion 2223 may be disposed on an upper portion of the bus bar body 2221. The bus bar protrusion 2223 may be disposed above the slot 2222. The connector 300 (see FIG. 1) may be coupled to the bus bar protrusion 2223.

Referring to FIG. 3, the cover part 210 may include a first cover 211 and a second cover 212. The first cover 211 may form a left side of the cover part 210, and the second cover 212 may form a right side of the cover part 210. The second cover 212 may face the first cover 211. The first cover 211 may be coupled to a left side of the second cover 212.

The first cover 211 may include a first cover vertical part 2111. The first cover vertical part 2111 may have a plate shape. A thickness direction of the first cover vertical part 2111 may be the left-right direction. An inner surface of the first cover vertical part 2111 may be a right surface of the first cover vertical part 2111. An outer surface of the first cover vertical part 2111 may be a left surface of the first cover vertical part 2111.

The first cover 211 may include a first cover lower part 2112. The first cover lower part 2112 may extend inward (rightward) from a lower end of the first cover vertical part 2111.

The first cover 211 may include a first cover upper part 2113. The first cover upper part 2113 may extend inward (rightward) from an upper end of the first cover vertical part 2111.

The first cover 211 may include a first cover vent groove 2114. The first cover vent groove 2114 may penetrate the first cover upper part 2113 in the up-down direction, and an inner side (right side) of the first cover vent groove 2114 may be open. The first cover 211 may include a plurality of first cover vent grooves 2114. The first cover vent grooves 2114 may be disposed adjacent to both ends of a battery cell 230 accommodated in the first cover 211.

The first cover 211 may include a first cover inner space 2115. The first cover inner space 2115 may be penetrated in the front-rear direction, and an inner side (right side) of the first cover inner space 2115 may be open. The first cover inner space 2115 may communicate with the first cover vent groove 2114.

The second cover 212 may be symmetrical to the first cover 211 in the left-right direction. The second cover 212 may include a second cover vertical part 2121, a second cover lower part 2122, a second cover upper part 2123, a second cover vent groove 2124, and a second cover inner space 2125 corresponding to the first cover vertical part 2111, the first cover lower part 2112, the first cover upper part 2113, the first cover vent groove 2114, and the first cover inner space 2115 of the first cover 211.

The second cover 212 may include a plurality of second cover vent grooves 2124. The respective second cover vent grooves 2124 may communicate with the respective first cover vent grooves 2114. When the second cover 212 is coupled to the first cover 211, the vent hole 215 (see FIG. 2) may be formed by the first cover vent groove 2114 and the second cover vent groove 2124. The vent hole 215 may be disposed adjacent to both ends of each battery cell 230. Hence, when a fire occurs in the battery cell 230 and gas or flame comes out from a portion in which a cell body 231 and an electrode lead 232 are coupled, the gas or flame may be easily discharged to the outside of the cover part 210 (see FIG. 2) through the vent hole 215.

The second cover inner space 2125 may communicate with the first cover inner space 2115. The cover inner spaces 2115 and 2125 may indicate at least one of the first cover inner space 2115 and the second cover inner space 2125. The battery cell 230 may be accommodated in the cover inner spaces 2115 and 2125.

The second cover 212 may include a cooling member 2126. The cooling member 2126 may protrude to the outside (right side) of the second cover vertical part 2121. The cooling member 2126 may extend in the front-rear direction. For example, the cooling member 2126 may extend from a front end to a rear end of the second cover vertical part 2121. For example, the cooling member 2126 may be a cooling fin.

The second cover 212 may include a plurality of cooling members 2126. The plurality of cooling members 2126 may be arranged to be spaced apart from each other in the up-down direction. The cooling member 2126 may increase a cross-sectional area of an outer surface (right surface) of the second cover 212. Heat generated from the battery cell 230 accommodated in the cover part 210 may be cooled through the plurality of cooling members 2126.

The battery cell assembly 200 may include a front bus bar assembly 220A coupled to front ends of the first cover 211 and the second cover 212, and a rear bus bar assembly 220B coupled to rear ends of the first cover 211 and the second cover 212. The front bus bar assembly 220A and the rear bus bar assembly 220B may be arranged to face each other.

The battery cell assembly 200 may include the battery cell 230. The battery cell assembly 200 may include a plurality of battery cells 230. For example, the battery cell assembly 200 may include three battery cells 230. The plurality of battery cells 230 may be connected to each other in one direction. For example, the plurality of battery cells 230 may be connected in series in the front-rear direction. The plurality of battery cells 230 may be referred to as a battery group.

The battery cell 230 may include the cell body 231. The cell body 231 may extend in the front-rear direction. The cell body 231 may have a shape in which an electrode assembly is wrapped with an exterior material.

The battery cell 230 may include the electrode lead 232. The electrode lead 232 may protrude from the cell body 231. The battery cell 230 may include a plurality of electrode leads 232. For example, the battery cell 230 may include a front electrode lead 232A protruding to a front of the cell body 231 and a rear electrode lead 232B protruding to a rear of the cell body 231.

The front electrode lead 232A disposed on one side (front side) of the plurality of battery cells 230 among the plurality of electrode leads 232 may be coupled to the front bus bar assembly 220A. The rear electrode lead 232B disposed on other side (rear side) of the plurality of battery cells 230 among the plurality of electrode leads 232 may be coupled to the rear bus bar assembly 220B. The rear electrode lead 232B of one of two adjacent battery cells 230 of the plurality of battery cells 230 may be coupled to the front electrode lead 232A of the other battery cell 230.

The battery cell assembly 200 may include an insulating part 240. The insulating part 240 may be coupled to the electrode lead 232. The insulating part 240 may surround a perimeter of the electrode lead 232. The battery cell assembly 200 may include a plurality of insulating parts 240. The plurality of insulating parts 240 may include a first insulating part 241, a second insulating part 242, a third insulating part 243, and a fourth insulating part 244.

The first insulating part 241 may be coupled to the second insulating part 242, and the first insulating part 241 and the second insulating part 242 may be formed symmetrically in the left-right direction. The first insulating part 241 and the second insulating part 242 may be referred to as outer insulating parts 241 and 242.

The outer insulating parts 241 and 242 may be disposed on both sides (front and rear sides) of the plurality of battery cells 230. The outer insulating parts 241 and 242 may be disposed between the bus bar assembly 220 and the cell body 231. The outer insulating parts 241 and 242 may form a partition between the bus bar assembly 220 and the cell body 231.

For example, the outer insulating parts 241 and 242 may be disposed between the front bus bar assembly 220A and the cell body 231 of the battery cell 230 coupled to the front bus bar assembly 220A. For example, the outer insulating parts 241 and 242 may be disposed between the rear bus bar assembly 220B and the cell body 231 of the battery cell 230 coupled to the rear bus bar assembly 220B. A front-rear direction length of each of the outer insulating parts 241 and 242 may correspond to a front-rear direction length of the electrode lead 232 disposed between the bus bar assembly 220 and the cell body 231.

The third insulating part 243 may be coupled to the fourth insulating part 244, and the third insulating part 243 and the fourth insulating part 244 may be formed symmetrically in the left-right direction. The third insulating part 243 and the fourth insulating part 244 may be referred to as inner insulating parts 243 and 244.

The inner insulating parts 243 and 244 may be disposed on the electrode leads 232 of two adjacent battery cells 230 of the plurality of battery cells 230. For example, as illustrated in FIG. 3, when three battery cells 230 are connected in the front-rear direction, the battery cell assembly 200 may include two third insulating parts 243 and two fourth insulating parts 244. A front-rear direction length of each of the inner insulating parts 243 and 244 may correspond to a distance between the cell bodies 231 of two adjacent battery cells 230 of the plurality of battery cells 230.

When the bus bar assembly 220 and the electrode lead 232 are coupled, an end of the electrode lead 232 may be inserted into the bus bar assembly 220. When two adjacent battery cells 230 of the plurality of battery cells 230 are coupled, the electrode leads 232 of the two battery cells 230 may be overlapped and coupled with each other. The outer insulating parts 241 and 242 in the front-rear direction may be shorter than the inner insulating parts 243 and 244 in the front-rear direction.

The battery cell assembly 200 may include a pad 250. The pad 250 may have a plate shape. The pad 250 may extend in the front-rear direction and the up-down direction. A thickness direction of the pad 250 may be the left-right direction. The pad 250 may be disposed between the first cover 211 and the plurality of battery cells 230. The pad 250 may be in contact with the first cover 211 and the plurality of battery cells 230. The pad 250 may equally provide a surface pressure to the plurality of battery cells 230. The plurality of battery cells 230 may be uniformly in contact with the second cover 212 by the pad 250. As a result, cooling efficiency of the cooling member 2126 of the second cover 212 can be improved.

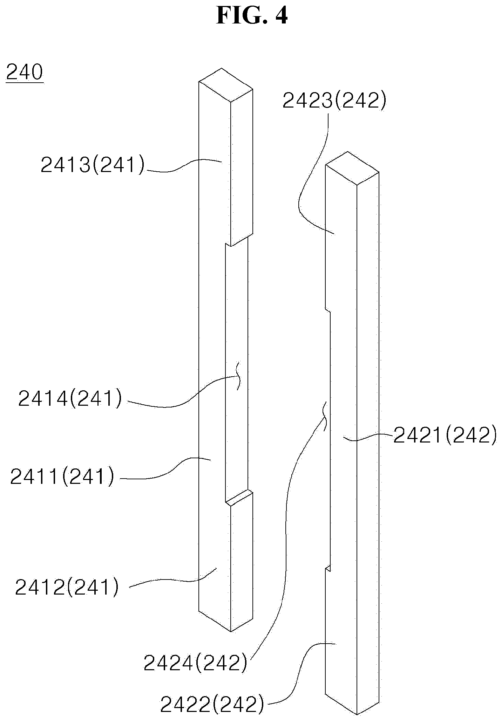

FIG. 4 illustrates the first insulating part 241 and the second insulating part 242 of the battery cell assembly 200 of FIG. 3. The third insulating part 243 and the fourth insulating part 244 may extend in the front-rear direction more than the first insulating part 241 and the second insulating part 242 and may have the same configuration as the first insulating part 241 and the second insulating part 242.

The first insulating part 241 may include a first insulating vertical part 2411. The first insulating vertical part 2411 may have a plate shape. The first insulating vertical part 2411 may extend in the up-down direction. A thickness direction of the first insulating vertical part 2411 may be the left-right direction.

The first insulating part 241 may include a first insulating lower part 2412. The first insulating lower part 2412 may protrude inward (rightward) from a lower portion of the first insulating vertical part 2411. The first insulating lower part 2412 may be disposed below the electrode lead 232 (see FIG. 3).

The first insulating part 241 may include a first insulating upper part 2413. The first insulating upper part 2413 may protrude inward (rightward) from an upper portion of the first insulating vertical part 2411. The first insulating upper part 2413 may be disposed on the electrode lead 232 (see FIG. 3).

The first insulating part 241 may include a first electrode lead insertion groove 2414. The first electrode lead insertion groove 2414 may be surrounded by the first insulating vertical part 2411, the first insulating lower part 2412, and the first insulating upper part 2413. The first electrode lead insertion groove 2414 may be penetrated in the front-rear direction, and an inner side (right side) of the first electrode lead insertion groove 2414 may be open. The electrode lead 232 (see FIG. 3) may be inserted into the first electrode lead insertion groove 2414.

The second insulating part 242 may be symmetrical to the first insulating part 241 in the left-right direction. The second insulating part 242 may include a second insulating vertical part 2421, a second insulating lower part 2422, a second insulating upper part 2423, and a second electrode lead insertion groove 2424 corresponding to the first insulating vertical part 2411, the first insulating lower part 2412, the first insulating upper part 2413, and the first electrode lead insertion groove 2414 of the first insulating part 241.

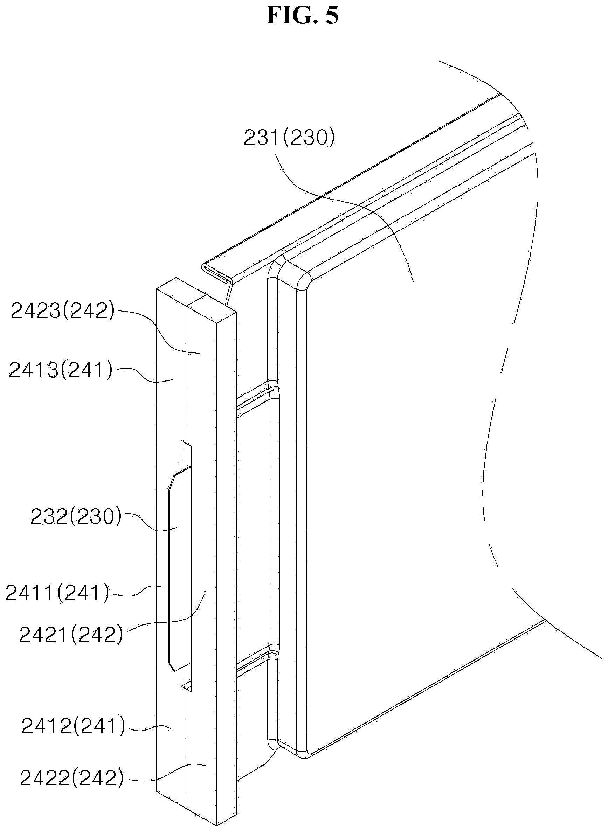

FIG. 5 illustrates that the first insulating part 241 and the second insulating part 242 of FIG. 4 are coupled to the battery cell 230.

The first insulating part 241 and the second insulating part 242 may be coupled to each other by a force that allows the first cover 211 (see FIG. 3) and the second cover 212 (see FIG. 3) to be coupled. The second insulating lower part 2422 may be in contact with the first insulating lower part 2412. The second insulating upper part 2423 may be in contact with the first insulating upper part 2413. The second electrode lead insertion groove 2424 may communicate with the first electrode lead insertion groove 2414. An upper portion, a lower portion, a left side, and a right side of the electrode lead 232 inserted into the first and second electrode lead insertion grooves 2414 and 2424 may be blocked by the first insulating part 241 and the second insulating part 242. The electrode lead 232 may be insulated from the first cover 211 (see FIG. 3) and the second cover 212 (see FIG. 3) by the first insulating part 241 and the second insulating part 242.

The electrode lead 232 may pass through the first insulating part 241 and the second insulating part 242 and may be coupled to the bus bar assembly 220 (see FIG. 3).

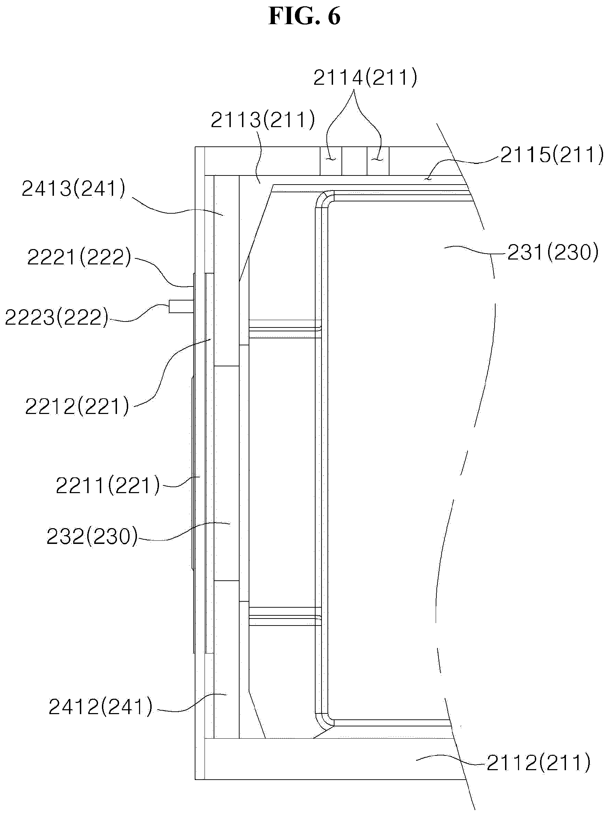

FIG. 6 illustrates a portion of the battery cell assembly 200 of FIG. 2 in which the bus bar assembly 220 and the battery cell 230 are connected in a state in which the second cover 212 is removed.

A lower surface of the first cover upper part 2113 may be disposed to be spaced apart from an upper surface of the cell body 231 in the up-down direction. A space between the lower surface of the first cover upper part 2113 and the upper surface of the cell body 231 may be considered a part of the first cover inner space 2115. Since the first cover inner space 2115 communicates with the first cover vent groove 2114, gas or flame generated from the battery cell 230 may be discharged to the outside through the first cover vent groove 2114.

A front surface of the first insulating part 241 may be in contact with the bus bar assembly 220. The first insulating part 241 may be in contact with a rear surface of the bus bar insertion part 2212. A rear surface of the first insulating part 241 may be in contact with the cell body 231. The first insulating lower part 2412 may be in contact with a lower surface of the electrode lead 232. The first insulating upper part 2413 may be in contact with an upper surface of the electrode lead 232. The electrode lead 232 may be surrounded by the bus bar assembly 220, the cell body 231, and the first and second insulating parts 241 and 242 (see FIG. 5).

A lower surface of the first insulating lower part 2412 may be in contact with an upper surface of the first cover lower part 2112. An upper surface of the first insulating upper part 2413 may be in contact with the lower surface of the first cover upper part 2113. The first insulating part 241 may partition the first cover inner space 2115.

That is, the first insulating part 241 and the second insulating part 242 (see FIG. 5) may partition the cover inner spaces 2115 and 2125 (see FIG. 3). The first insulating part 241 and the second insulating part 242 may protect the bus bar assembly 220 from gas or flame that is discharged from the battery cell 230 to the cover inner spaces 2115 and 2125. The gas or flame in the cover inner spaces 2115 and 2125 may be discharged to the outside of the cover part 210 (see FIG. 2) through the vent hole 215 (see FIG. 2).

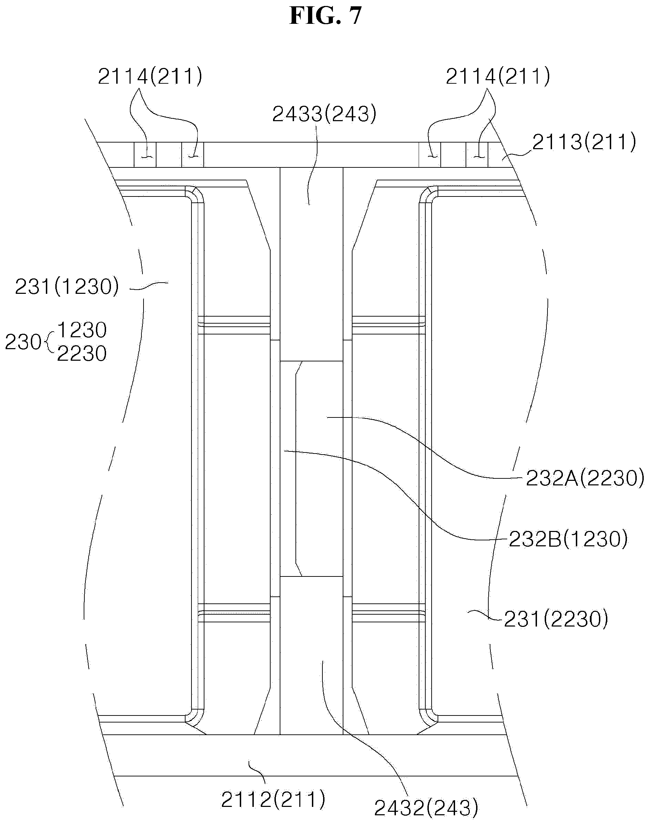

FIG. 7 illustrates a portion of the battery cell assembly 200 of FIG. 2 in which one battery cell 1230 and other battery cell 2230 adjacent to each other are connected in a state in which the second cover 212 is removed. The one battery cell 1230 may be a battery cell 230 disposed on the left side in the drawing, and the other battery cell 2230 may be a battery cell 230 disposed on the right side in the drawing.

A rear electrode lead 232B of the one battery cell 1230 and a front electrode lead 232A of the other battery cell 2230 may be overlapped and coupled with each other. A front surface of the third insulating part 243 may be in contact with a cell body 231 of the one battery cell 1230. A rear surface of the third insulating part 243 may be in contact with a cell body 231 of the other battery cell 2230.

A third insulating lower part 2432 and a third insulating upper part 2433 may correspond to the first insulating lower part 2412 (see FIG. 5) and the first insulating upper part 2413 (see FIG. 5). The third insulating lower part 2432 may be in contact with lower surfaces of two electrode leads 232A and 232B. The third insulating upper part 2433 may be in contact with upper surfaces of the two electrode leads 232A and 232B. The two electrode leads 232A and 232B may be surrounded by the cell body 231, and the third and fourth insulating parts 243 and 244 (see FIG. 3).

A lower surface of the third insulating lower part 2432 may be in contact with the upper surface of the first cover lower part 2112. An upper surface of the third insulating upper part 2433 may be in contact with the lower surface of the first cover upper part 2113. The third insulating part 243 may partition the first cover inner space 2115.

That is, the third insulating part 243 and the fourth insulating part 244 (see FIG. 3) may partition the cover inner spaces 2115 and 2125 (see FIG. 3). For example, the third insulating part 243 and the fourth insulating part 244 may protect the other battery cell 2230 from gas or flame that is discharged from the one battery cell 1230 to the cover inner spaces 2115 and 2125. The gas or flame discharged from the one battery cell 1230 may be discharged to the outside of the cover part 210 (see FIG. 2) through the vent hole 215 (see FIG. 2) adjacent to the one battery cell 1230. For example, the third insulating part 243 and the fourth insulating part 244 may protect the one battery cell 1230 from gas or flame that is discharged from the other battery cell 2230 to the cover inner spaces 2115 and 2125. The gas or flame discharged from the other battery cell 2230 may be discharged to the outside of the cover part 210 (see FIG. 2) through the vent hole 215 adjacent to the other battery cell 2230.

In other words, each of the cover inner spaces 2115 and 2125 partitioned by the insulating part 240 (see FIG. 3) may communicate with at least one of the plurality of vent holes 215 (see FIG. 2). The gas or flame discharged from the battery cell 230 to the cover inner spaces 2115 and 2125 partitioned by the insulating part 240 (see FIG. 3) may be discharged to the outside of the cover part 210 (see FIG. 2) through the vent hole 215. As a result, when a fire occurs in the battery cell 230, the spread of the fire to battery cells 230 adjacent to the battery cell 230 in which the fire occurred can be minimized.

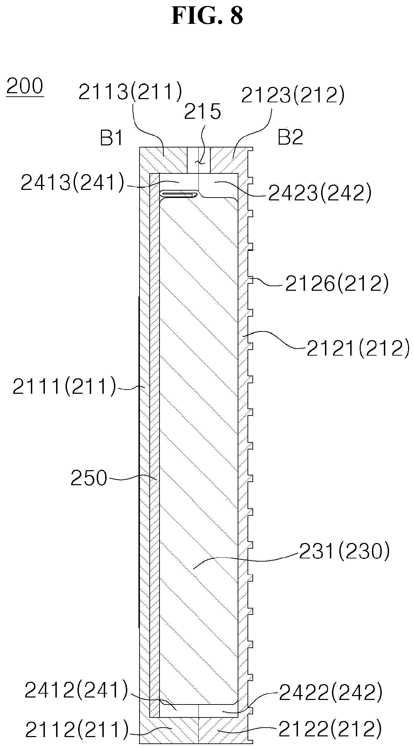

FIG. 8 is a cross-sectional view of the battery cell assembly 200 taken along B1-B2 of FIG. 2.

The cell body 231 may be accommodated between the first cover 211 and the second cover 212. The pad 250 may be disposed between the first cover 211 and the cell body 231. The pad 250 may be in contact with the right surface of the first cover 211 and the left surface of the cell body 231. The second cover 212 may include the cooling member 2126. The pad 250 may equally provide a surface pressure to the battery cells 230. When the battery cell 230 is in close contact with the second cover 212, the cooling efficiency of the cooling member 2126 can be improved.

The insulating part 240 may be disposed between the second cover 212 and the pad 250. The insulating part 240 may be disposed between the second cover vertical part 2121 and the pad 250. The insulating part 240 may be in contact with a left surface of the second cover vertical part 2121 and a right surface of the pad 250.

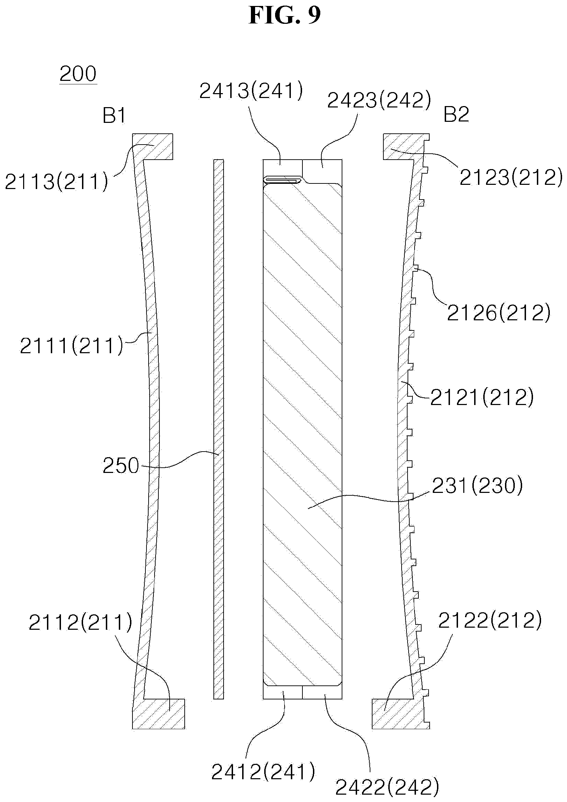

FIG. 9 is an exploded view of the battery cell assembly 200 based on an embodiment of the disclosed technology and is a cross-sectional view of the battery cell assembly 200 taken along B1-B2 of FIG. 2.

At least one of the first cover 211 and the second cover 212 may be formed to be convex toward the battery cell 230 before the first cover 211 and the second cover 212 are coupled. When the first cover 211 and the second cover 212 are coupled, the first cover 211 and the second cover 212 may be unfolded by the battery cell 230 and the pad 250.

A central portion of the first cover vertical part 2111 may protrude toward the battery cell 230 in the up-down direction more than both upper and lower ends of the first cover vertical part 2111. A central portion of the second cover vertical part 2121 may protrude toward the battery cell 230 in the up-down direction more than both upper and lower ends of the second cover vertical part 2121. For example, the first cover vertical part 2111 and the second cover vertical part 2121 may be bent closer to the battery cell 230 as they go from both the upper and lower ends to the central portion.

When the first cover 211 and the second cover 212 are coupled, the central portion of the first cover vertical part 2111 and the central portion of the second cover vertical part 2121 may apply an external force to the cell body 231 and the pad 250. In this process, the first cover vertical part 2111 and the second cover vertical part 2121 may be unfolded. The pad 250 may be in close contact with the cell body 231, and the cell body 231 may be in close contact with the second cover 212. As a result, the cooling efficiency of the second cover 212 can be improved.

FIG. 10 illustrates the battery pack 10 of FIG. 1 when viewed from the front. In FIG. 10, the bus bar assembly 220 disposed on the leftmost side may be referred to as one bus bar assembly 1220. In FIG. 10, the bus bar assembly 220 disposed on the second leftmost side may be referred to as other bus bar assembly 2220. FIG. 10 illustrates that the one bus bar assembly 1220 and the other bus bar assembly 2220 are coupled.

One side (left side) of the connector 300 may be coupled to a bus bar protrusion 2223 of the one bus bar assembly 1220. Other side (right side) of the connector 300 may be coupled to a bus bar protrusion 2223 of the other bus bar assembly 2220. The one bus bar assembly 1220 and the other bus bar assembly 2220 may be electrically connected by the connector 300. The connector 300 may connect in parallel a plurality of battery cells 230 (see FIG. 3) coupled to the one bus bar assembly 1220 to a plurality of battery cells 230 coupled to the other bus bar assembly 2220.

The plurality of front through holes 1231 may be disposed between the one bus bar assembly 1220 and the other bus bar assembly 2220. For example, the plurality of front through holes 1231 may be disposed closer to the right side of the front support part 123.

FIG. 11 illustrates a cross section of the battery pack 10 taken along A1-A2 of FIG. 1 when viewed from the front.

The channel part 110 may include an upper plate 1111. The upper plate 1111 may have a plate shape. A thickness direction of the upper plate 1111 may be the up-down direction.

The channel part 110 may include a left plate 1112. The left plate 1112 may have a plate shape. A thickness direction of the left plate 1112 may be the left-right direction. The left plate 1112 may extend downward from a left end of the upper plate 1111.

The channel part 110 may include a right plate 1113. The right plate 1113 may have a plate shape. A thickness direction of the right plate 1113 may be the left-right direction. The right plate 1113 may extend downward from a right end of the upper plate 1111. The right plate 1113 may face the left plate 1112.

The channel part 110 may include a lower plate 1114. The lower plate 1114 may have a plate shape. A thickness direction of the lower plate 1114 may be the up-down direction. The lower plate 1114 may connect a lower end of the left plate 1112 to a lower end of the right plate 1113.

The channel part 110 may include a guide part 1115. The guide part 1115 may protrude from the lower plate 1114 toward the inner space 112. For example, the guide part 1115 may protrude upward from the lower plate 1114. The channel part 110 may include a plurality of guide parts 1115. The guide part 1115 may be disposed between two adjacent rear insertion holes 132 of the plurality of rear insertion holes 132. Alternatively, the guide part 1115 may be disposed between two adjacent front insertion holes 122 of the plurality of front insertion holes 122 (see FIG. 10).

The battery cell assembly 200 may be disposed between two adjacent guide parts 1115 of the plurality of guide parts 1115. The guide part 1115 may make it easier to insert the battery cell assembly 200 into the channel part 110.

Alternatively, the guide part 1115 may protrude downward from the upper plate 1111. Alternatively, the channel part 110 may include both a guide part 1115 protruding upward from the lower plate 1114 and a guide part 1115 protruding downward from the upper plate 1111.

When the battery cell assembly 200 is installed in the channel part 110, the cooling member 2126 may be installed toward a flow path formed between the front support part 123 (see FIG. 10) and the rear support part 133. As a result, the cooling efficiency of the cooling member 2126 through the flow path can be increased.

Only specific examples of implementations of certain embodiments are described. Variations, improvements and enhancements of the disclosed embodiments and other embodiments may be made based on the disclosure of this patent document.

## Claims

1. A battery cell assembly (200) comprising:
a battery cell (230) of a shape extending in a front-rear direction;
a pad (250) of a shape extending in the front-rear direction, the pad (250) being in contact with one surface of the battery cell (230); and
a cover part (210) forming a cover inner space configured to accommodate the battery cell (230) and the pad (250),
wherein the cover part (210) includes:
a first cover (211) in contact with one surface of the pad (250); and
a second cover (212) coupled to the first cover (211), the second cover (212) being in contact with other surface of the battery cell (230),
wherein the second cover (212) includes a cooling member (2126) forming at least a portion of an outer surface of the second cover (212).

2. The battery cell assembly (200) of claim 1, wherein the battery cell (230) includes a plurality of battery cells (230), and the plurality of battery cells (230) is connected to each other in the front-rear direction, and
wherein the pad (250) is in contact with one surface of each of the plurality of battery cells (230).

3. The battery cell assembly (200) of claim 2, wherein each of the plurality of battery cells (230) includes:
a cell body (231) of a shape extending in the front-rear direction; and
a plurality of electrode leads (232) configured to respectively protrude from a front end and a rear end of the cell body (231),
wherein two adjacent battery cells of the plurality of battery cells are connected to each other by a coupling of the electrode leads (232).

4. The battery cell assembly (200) of claim 3, further comprising:
a plurality of bus bar assemblies (220) that is coupled to the first cover (211) and the second cover (212) to form a front surface and a rear surface of the battery cell assembly (200), and
wherein each of the plurality of bus bar assemblies (220) is coupled to the electrode lead (232) disposed at a front end or a rear end of each of the plurality of battery cells (230).

5. The battery cell assembly (200) of claim 4, further comprising:
a plurality of insulating parts (240) respectively coupled to the plurality of electrode leads (232),
wherein each of the plurality of insulating parts (240) surrounds a perimeter of the electrode lead (232).

6. The battery cell assembly (200) of claim 5, wherein the plurality of insulating parts (240) includes:
an outer insulating part (241, 242) configured to surround the perimeter of the electrode lead (232) coupled to the bus bar assembly (220); and
an inner insulating part (243, 244) configured to surround the perimeter of the electrode lead (232) disposed between two adjacent battery cells of the plurality of battery cells.

7. The battery cell assembly (200) of any of claims 5 or 6, wherein each of the plurality of insulating parts (240) is disposed between the pad (250) and the second cover (212), and
wherein at least one of the plurality of insulating parts (240) is in contact with an inner surface of the cover part (210) and the pad (250) and is disposed between the bus bar assembly (220) and the cell body (231) to form a partition.

8. The battery cell assembly (200) of any of claims 5 or 6, wherein each of the plurality of insulating parts (240) is disposed between the pad (250) and the second cover (212), and
wherein at least one of the plurality of insulating parts (240) is in contact with an inner surface of the cover part (210) and the pad (250) and partitions the cover inner space.

9. The battery cell assembly (200) of claim 8, wherein the cover part (210) includes a plurality of vent holes (215) configured to connect an outside of the cover part (210) to the cover inner space, and
wherein each of the cover inner spaces partitioned by the at least one insulating part (240) communicates with at least one of the plurality of vent holes (215).

10. The battery cell assembly (200) of any of claims 1 to 9, wherein at least one of the first cover (211) and the second cover (212) is convex toward the battery cell (230) before the first cover (211) and the second cover (212) are coupled, and
wherein, based on the first cover (211) and the second cover (212) being coupled, at least one of the first cover (211) and the second cover (212) is unfolded.

11. A battery pack (10) comprising:
a frame (100);
a plurality of battery cell assemblies (200) accommodated in the frame (100); and
a connector (300) configured to connect the plurality of battery cell assemblies (200) to each other,
wherein the frame (100) includes:
a channel part (110) configured to extend in a front-rear direction and form an inner space; and
a front plate (120) and a rear plate (130) respectively coupled to a front and a rear of the channel part (110), the front plate (120) and the rear plate (130) each including a plurality of insertion holes (122, 132) configured to communicate with the inner space,
wherein each of the plurality of battery cell assemblies (200) is accommodated in the inner space through each of the plurality of insertion holes (122, 132).

12. The battery pack (10) of claim 11, wherein each of the front plate (120) and the rear plate (130) includes a support part (123, 133) disposed between two adjacent insertion holes of the plurality of insertion holes (122, 132), and
wherein the support part (123, 133) includes a through hole (1231, 1331) configured to communicate with the inner space.

13. The battery pack (10) of claim 12, further comprising:
a flow path configured to extend from the through hole (1231, 1331) of the front plate (120) to the through hole (1231, 1331) of the rear plate (130).

14. The battery pack (10) of any of claims 11 to 13, wherein each of the plurality of battery cell assemblies (200) includes:
a battery cell (230) of a shape extending in the front-rear direction;
a pad (250) of a shape extending in the front-rear direction, the pad (250) being in contact with one surface of the battery cell (230); and
a cover part (210) configured to accommodate the battery cell (230) and the pad (250),
wherein the cover part (210) includes:
a first cover (211) in contact with one surface of the pad (250); and
a second cover (212) coupled to the first cover (211), the second cover (212) being in contact with other surface of the battery cell (230),
wherein the second cover (212) includes a cooling member (2126) forming at least a portion of an outer surface of the second cover (212);
preferably each of the plurality of battery cell assemblies (200) comprises a battery cell assembly (200) according to any of claims 1 to 10.

15. The battery pack (10) of claim 14, wherein the cooling member (2126) is disposed adjacent to the flow path.
